# EUROPÄISCHE PATENTSCHRIFT

(11) **EP 1 566 091 B1**
(45) Veröffentlichungstag und Bekanntmachung des Hinweises auf die Patenterteilung: **24.09.2008**
(21) Anmeldenummer: 05101095.7
(22) Anmeldetag: 15.02.2005
(51) Int. Cl.: A01D 45/02

(54) **Erntegerät mit einem Stängelhäcksler**
Harvesting device with a stem chopper
Dispositif de récolte avec un hacheur pour tiges

(30) Priorität: 20.02.2004 DE 102004008339
(43) Veröffentlichungstag der Anmeldung: 24.08.2005
(73) Patentinhaber: Maschinenfabrik Kemper GmbH & Co. KG, 48973 Stadtlohn (DE)
(72) Erfinder: Wübbels, Richard, 46414, Rhede (DE); Schulze Eissing, Josef, 48739, Legden (DE)
(74) Vertreter: Holst, Sönke

(56) Entgegenhaltungen:
- EP-A- 1 106 049
- US-A- 3 984 966
- US-A- 4 543 774
- US-A- 5 884 464
- US-A- 5 911 673

## Beschreibung

Die Erfindung betrifft ein Erntegerät, insbesondere einen Maispflücker, mit zumindest zwei Einzugs- und Pflückeinheiten, die jeweils mit einem Pflückspalt, einer Einzugseinrichtung und einem Stängelhäcksler versehen sind, wobei die Einzugseinrichtung betreibbar ist, Pflanzen in den Pflückspalt einzuziehen, durch welchen Fruchtstände von den Pflanzen abtrennbar sind, und der zum Zerkleinern der Stängel der Pflanzen vorgesehene Stängelhäcksler stromab der Einzugseinrichtung angeordnet ist und ein Messer aufweist, das um eine sich zumindest näherungsweise vertikal erstreckende Achse in Rotation versetzbar ist.

Es werden verschiedene Fruchtarten landwirtschaftlich angebaut, bei denen beabsichtigt ist, nur die Fruchtstände zur Weiterverarbeitung zu verwenden. Beispiele sind Sonnenblumen, Sojabohnen, Baumwolle oder Kolbenmais. Derartige Fruchtarten werden in der Regel mit so genannten Pflückern geerntet, die in der Regel mehrere nebeneinander angeordnete Einzugs- und Pflückeinheiten aufweisen, um mehrere Reihen der in nebeneinander liegenden Reihen angebauten Pflanzen gleichzeitig abernten zu können. Jede Einzugs- und Pflückeinheit weist einen Pflückspalt und eine Einzugseinrichtung auf. Letztere setzt sich in der Regel aus zwei beidseits und unterhalb des Pflückspalts angeordneten Pflückwalzen zusammen, die gegensinnig rotieren. Die Einzugseinrichtung zieht die Pflanzen nach unten in den Pflückspalt ein. Letzterer ist derart schmal dimensioniert, dass zwar der Stängel der Pflanze hindurch passt, jedoch aber nicht die Fruchtstände. Diese werden somit durch den Pflückspalt vom Stängel abgetrennt und anschließend einer Verwertung zugeführt, beispielsweise in einem Mähdrescher ausgedroschen.

Die Stängel der Pflanzen verbleiben auf dem Feld. Um die Verrottung zu beschleunigen, ist es gebräuchlich, sie durch stromab der Einzugseinrichtungen angeordnete Stängelhäcksler zu zerkleinern. Übliche Ausführungsformen derartiger Stängelhäcksler weisen um eine etwa vertikale Achse rotierende Messer auf, deren Hüllkreis die Einzugseinrichtung überdeckt. Im Stand der Technik ist es gebräuchlich, jeder Einzugs- und Pflückeinheit einen eigenen derartigen Stängelhäcksler zuzuordnen, s. DE 25 27 645 A oder DE 25 49 136 A. Der Stängel wird durch einen Stängelhäcksler in kleine Abschnitte zerteilt. Bei anderen Ausführungsformen sind die Pflückwalzen mit Messern versehen, die die Stängel in Längs- oder Querrichtung zerschneiden.

Stängelhäcksler mit stromab der Einzugseinrichtung rotierenden Messern sind derzeit hauptsächlich in Europa gebräuchlich. In Europa wird Mais in der Regel in einem Reihenabstand von 75 cm angebaut. In den USA finden hingegen unterschiedliche Reihenabstände Verwendung, beispielsweise 37,5 cm, 50 cm oder 55 cm. Stängelhäcksler werden in den USA derzeit eher selten verwendet.

Mit der Verbreitung der so genannten Non-Tillage-Bodenbearbeitung, bei der das Feld nach der Ernte nur noch mit einer Sämaschine bearbeitet wird, die mit einigen Bodenbearbeitungswerkzeugen ausgestattet ist, erweist sich nunmehr auch in den USA der Einsatz von Stängelhäckslern als sinnvoll, um die Verrottung der auf dem Feld verbleibenden Stängel zu beschleunigen. Die in den USA gebräuchlichen, engeren Reihenabstände könnten analog auch in Europa Verwendung finden.

Es ist somit wünschenswert, benachbarte Einzugs- und Pflückeinheiten derart nahe aneinander anbringen zu können, dass mit ihnen die Ernte auch enger nebeneinander angebauter Pflanzenreihen möglich wird, beispielsweise von im Abstand von 50 cm angebauten Reihen. Zur Anpassung der Erntegeräte an den Reihenabstand der zu erntenden Pflanzen ist es üblich, die Einzugs- und Pflückeinheiten in horizontaler, sich quer zur Vorwärtsrichtung erstreckenden Richtung verschiebbar auf einem Querträger anzubringen.

Falls die Einzugs- und Pflückeinheiten jedoch mit einem Stängelhäcksler ausgestattet sind, ist es problematisch, die Einzugs- und Pflückeinheiten hinreichend nahe aneinander zu positionieren, da die Stängelhäcksler benachbarter Einzugs- und Pflückeinheiten dann miteinander kollidieren würden. Es wäre eine Verkleinerung des Durchmessers des Stängelhäcklers denkbar. Dadurch würde sich dessen Umfangsgeschwindigkeit und in gleichem Maße auch die Arbeitsqualität verschlechtern.

In einem Prospekt der Fa. Geringhoff mit Druckvermerk 108511 werden Maispflückvorsätze der Serie GP dargestellt. Diese Pflücker sind mit Maisstrohhäckslern der Bezeichnung "HZ" mit um die vertikale Achse rotierenden Messern ausgestattet. Jeder Pflückeinheit ist ein Maisstrohhäcksler zugeordnet. Die Länge der Messer ist derart groß, dass sich die von benachbarten Messern beschriebenen Hüllkreise überlappen. Da alle Messer in einer Höhenebene angeordnet sind, ist offenbar eine winkelversetzte Anordnung und Synchronisation des Antriebs aller Messer eines Pflückers vorgesehen, um Kollisionen der Messer zu vermeiden. Falls ein Schaden im Antriebsstrang eines Stängelhäckslers auftritt, ist bei diesen Geräten mit umfangreichen Folgeschäden zu rechnen.

In der US 5 911 673 A wird vorgeschlagen, die Pflückspalte in seitlich geneigten Ebenen anzuordnen, um die Einzugs- und Pflückeinheiten näher aneinander anbringen zu können. Die US 5 884 464 A schlägt vor, die benachbarten Einzugs- und Pflückeinheiten jeweils in unterschiedlichen Höhenebenen versetzt zu-einander anzuordnen, ebenfalls um eine nähere Anordnung der Einzugs- und Pflückeinheiten zu ermöglichen. Die in diesen beiden Patentschriften offenbarten Erntegeräte weisen keine Stängelhäcksler auf.

Die der Erfindung zu Grunde liegende Aufgabe wird darin gesehen, einen Erntevorsatz mit Einzugs- und Pflückeinheiten und einem Stängelhäcksler bereitzustellen, der eine hinreichend hohe Umfangsgeschwindigkeit aufweist und einen engen Abstand benachbarter Einzugs- und Pflückeinheiten ermöglicht, wobei aber keine Synchronisation der benachbarten Stängelhäcksler erforderlich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf ein Erntegerät eingangs erwähnter Art. Es wird vorgeschlagen, die Stängelhäcksler in Positionen anzubringen, in der auch ohne Synchronisation keine Kollisionen benachbarter Stängelhäcksler möglich sind. Dazu sind die Stängelhäcksler benachbarter Einzugs- und Pflückeinheiten in der Vorwärtsrichtung des Erntegeräts zueinander versetzt angeordnet. Alternativ oder zusätzlich sind die Stängelhäcksler bzw. zumindest ihre äußeren Bereiche, die ansonsten kollidieren könnten, in vertikaler Richtung versetzt.

Auf diese Weise vermeidet man das Problem möglicher Kollisionen von benachbarten Stängelhäckslern bei kleinen Reihenabständen. Durch den möglichen, relativ großen Durchmesser des vom Messer des Stängelhäckslers beschriebenen Hüllkreises erzielt man eine relativ hohe Umfangsgeschwindigkeit und somit eine recht gute Häckselqualität.

In einer Ausführungsform der Erfindung sind die benachbarten Einzugs- und Pflückeinheiten und mit ihnen auch die Stängelhäcksler in Vorwärtsrichtung versetzt zueinander angeordnet. Dadurch vermeidet man ein Überdecken der Hüllkreise der Stängelhäcksler und mögliche Kollisionen.

In einer anderen Ausführungsform überlappen sich die Hüllkreise der Stängelhäcksler. Um Kollisionen unmöglich zu machen, werden zumindest die überlappenden Bereiche der Stängelhäcksler in vertikaler Richtung zueinander versetzt angeordnet. Im Einzelnen können die Drehachsen eines oder mehrerer Stängelhäcksler zur Seite geneigt sein, die überlappenden Bereiche nach unten bzw. oben abgewinkelt oder anderweitig relativ zueinander in vertikaler Richtung versetzt angeordnet sein, oder die Ebenen benachbarter Stängelhäcksler befinden sich jeweils in unterschiedlichen Höhen. Dadurch wird jeweils ein hinreichender Abstand zwischen benachbarten Stängelhäckslern erzielt, so dass Kollisionen nicht zu befürchten sind.

Die Erfindung erweist sich als besonders vorteilhaft, wenn eine oder mehrere Einzugs- und Pflückeinheiten mit den Stängelhäckslern seitlich verschiebbar am Erntegerät befestigt sind. Die Erfindung ermöglicht, Erntegut zu ernten, das in Reihenabständen steht, die kleiner als die Hüllkreisdurchmesser der Stängelhäcksler sind.

In den Zeichnungen sind vier nachfolgend näher beschriebene Ausführungsbeispiele der Erfindung dargestellt. Es zeigt:
- Fig. 1: eine perspektivische Ansicht eines Mähdreschers mit einem daran angebrachten Erntegerät,
- Fig. 2: eine Vorderansicht des Erntegeräts,
- Fig. 3: eine Draufsicht auf eine Einzugs- und Pflückeinheit des Erntegeräts,
- Fig. 4: eine Seitenansicht der Einzugs- und Pflückeinheit,
- Fig. 5: eine Draufsicht auf die Einzugs- und Pflückeinheiten gemäß einer ersten Ausführungsform der Erfindung,
- Fig. 6: eine Vorderansicht der Einzugs- und Pflückeinheiten gemäß einer zweiten Ausführungsform der Erfindung,
- Fig. 7: eine Vorderansicht der Einzugs- und Pflückeinheiten gemäß einer dritten Ausführungsform der Erfindung, und
- Fig. 8: eine Vorderansicht der Einzugs- und Pflückeinheiten gemäß einer vierten Ausführungsform der Erfindung.

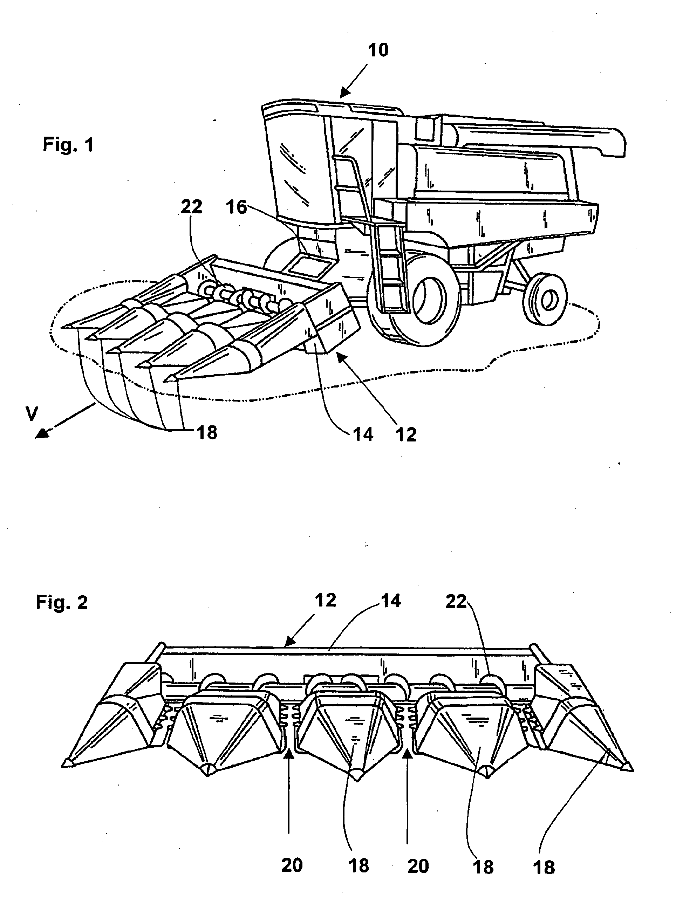

In der Figur 1 ist ein Mähdrescher 10 mit einem daran lösbar angebrachten Erntegerät 12 in Form eines Erntevorsatzes dargestellt. Das Erntegerät 12 umfasst einen Rahmen 14, der an dem Schrägförderer 16 des Mähdreschers abnehmbar angebracht ist. Der Rahmen 14 trägt an seiner Vorderseite fünf Halmteiler 18, zwischen denen sich jeweils eine Einzugs- und Pflückeinheit 20 befindet, s. Figur 2. Es kann auch eine beliebige andere Anzahl an Einzugs- und Pflückeinheiten 20 verwendet werden. An der Rückseite der Einzugs- und Pflückeinheiten 20 befindet sich eine Querförderschnecke 22, welche die geernteten Fruchtstände der Pflanzen dem Schrägförderer 16 des Mähdreschers 10 zuführt. Beim Erntebetrieb bewegt der selbstfahrende Mähdrescher 10 das Erntegerät 12 in einer Vorwärtsrichtung V über ein abzuerntendes Feld.

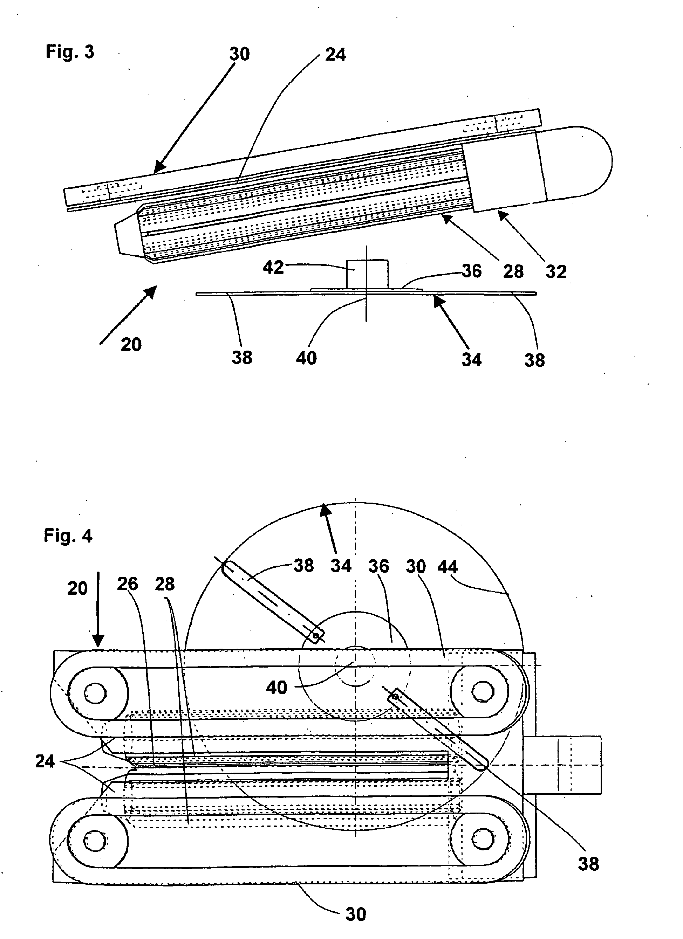

Der Aufbau der Einzugs- und Pflückeinheiten 20 ist an sich konventionell und in den Figuren 3 und 4 am Besten erkennbar. Die Einzugs- und Pflückeinheiten 20 umfassen jeweils ein Abstreifblech 24, in dem sich ein in Vorwärtsrichtung V nach vorn geöffneter Pflückspalt 26 befindet, eine Einzugseinrichtung 28 in Form von zwei sich unterhalb des Pflückspaltes 24 in dessen Längsrichtung erstreckenden, gegensinnig rotierenden Pflückwalzen und zwei mit (nicht eingezeichneten) Mitnehmern ausgestattete Kettenförderer 30, die sich oberhalb des Abstreifblechs 24 befinden.

Im Betrieb ziehen die Kettenförderer 30 die Stängel der auf einem Feld stehenden Pflanzen zwischen sich nach hinten ein und verbringen sie in den Pflückspalt 26. Unterhalb des Pflückspalts 26 werden die Stängel von den Pflückwalzen der Einzugseinrichtung 28 erfasst und nach unten eingezogen. Die Pflanzen werden durch die Kettenförderer 30 entlang des Pflückspalts 26 nach hinten verbracht. Fruchtstände, wie beispielsweise Maiskolben, werden durch den Pflückspalt 26 von den Stängeln getrennt und durch die Kettenförderer 30 nach hinten abtransportiert. Dort werden sie durch die Querförderschnecke 22 dem Schrägförderer 16 zugeführt. Anstelle der dargestellten, konventionellen Einzugs- und Pflückeinheiten 20 können auch Einzugs- und Pflückeinheiten mit Rotationseinzug verwendet werden, wie sie in der EP 1 305 899 A beschrieben werden, deren Offenbarung durch Verweis mit in die vorliegenden Unterlagen aufgenommen wird.

Die Einzugs- und Pflückeinheiten 20 werden durch Getriebe 32 angetrieben, die wiederum durch eine nicht eingezeichnete, sich über die Breite des Erntegeräts 10 erstreckende Querwelle angetrieben werden. Die Querwelle wird über einen nicht dargestellten Antriebsstrang in an sich bekannter Weise vom Mähdrescher 10 her angetrieben.

Um die auf dem Feld verbleibenden Stängel zu zerkleinern und ihre Verrottung zu beschleunigen, ist das Erntegerät 12 mit Stängelhäckslern 34 ausgestattet. Die Stängelhäcksler 34 setzen sich aus einer Scheibe 36 mit daran pendelnd gelagerten Messern 38 zusammen, die an den vorlaufenden und vorzugsweise auch an den nachlaufenden Kanten angeschliffen sind, um sie nach Abnutzung umdrehen zu können. Die Scheibe 36 ist in ihrer Mitte um eine etwa vertikal verlaufende Achse 40 drehbar gelagert und antreibbar. Es sind auch beliebige andere Ausführungsformen der Stängelhäcksler 34 denkbar, wie mit starr an der Scheibe 36 angebrachten Messern 38 oder mit Messern, die direkt an einer mittigen Welle angebracht sind. Die Zahl der Messer 38 ist beliebig. Die Stängelhäcksler 34 werden durch Getriebe 42 angetrieben, die wiederum mit dem Getriebe 32 in Antriebsverbindung stehen. Die Messer 38 beschreiben beim Betrieb Hüllkreise 44, die jeweils den rückwärtigen Bereich des Pflückspalts 26 der zugehörigen Einzugs- und Pflückeinheit 20 überdecken. Dadurch erreicht man, dass die unten zwischen den Einzugseinrichtungen 28 der Einzugs- und Pflückeinheit 20 austretenden Stängel zerkleinert auf dem Feld abgelegt werden. Für jede der Einzugs- und Pflückeinheiten 20 ist jeweils ein Stängelhäcksler 34 vorgesehen.

Die Einzugs- und Pflückeinheiten 20 sind gemeinsam mit ihren Stängelhäckslern 34 verschiebbar am Rahmen 14 gelagert, beispielsweise an einem Querträger. Auf diese Weise hat man die Möglichkeit, die Einzugs- und Pflückeinheiten 20 mit den Stängelhäckslern 34 entsprechend des Reihenabstands der auf dem abzuerntenden Feld angebauten Pflanzen zu positionieren.

Der von den Messern 38 der Stängelhäcksler 34 beschriebene Hüllkreis 44 hat einen relativ großen Durchmesser. Dadurch erreicht man bei nicht zu hohen Drehzahlen eine hohe Umfangsgeschwindigkeit der Messer 38 und eine gute Arbeitsqualität. Die möglichen Abstände zwischen den Einzugs- und Pflückeinheiten 20 sind bei bekannten Pflückern durch den Hüllkreis der Stängelhäcksler 34 begrenzt, solange die Messer nicht winkelversetzt angeordnet sind und synchronisiert angetrieben werden.

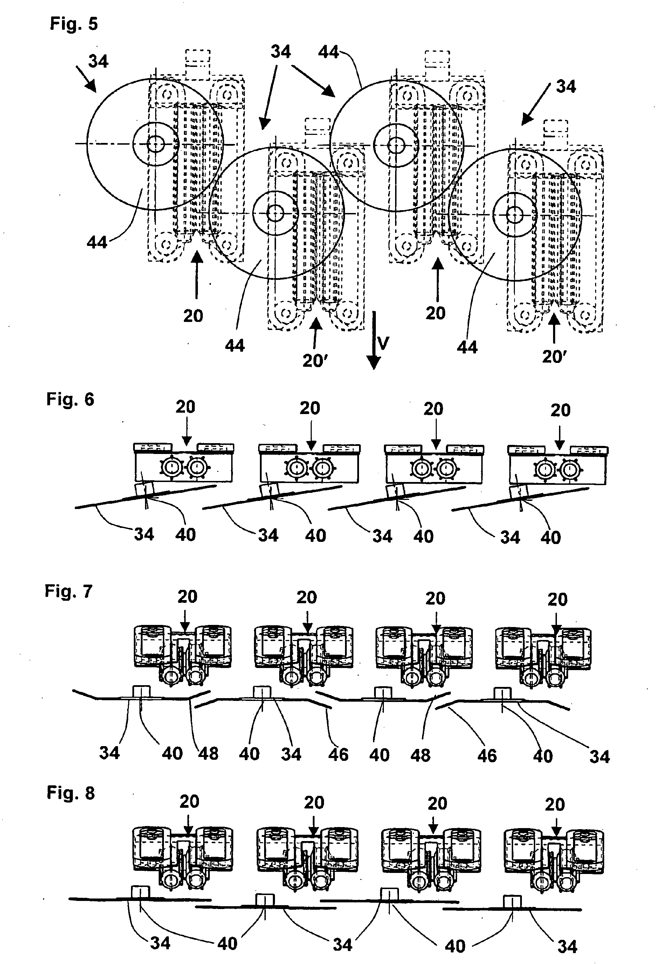

Um auf eine Synchronisation der Messer verzichten zu können, sind verschiedene Anordnungen der Stängelhäcksler 34 vorgeschlagen. Eine erste Ausführungsform ist in der Figur 5 dargestellt. Die Einzugs- und Pflückeinheiten 20 sind jeweils in Vorwärtsrichtung V versetzt zueinander angeordnet. Es wechseln sich somit in seitlicher Richtung betrachtet jeweils erste Einzugs- und Pflückeinheiten 20, die unmittelbar vor der Querförderschnecke 22 angeordnet sind, mit zweiten Einzugs- und Pflückeinheiten 20' ab, die gegenüber den ersten Einzugs- und Pflückeinheiten 20 in Vorwärtsrichtung V nach vorn versetzt angebracht sind. Dadurch wird eine Kollision von benachbarten Stängelhäckslern 34 auch ohne Synchronisation vermieden, obwohl der seitliche Abstand benachbarter Einzugs- und Pflückeinheiten 20, der dem Reihenabstand der zu erntenden Pflanzen entspricht, kleiner als der Durchmesser des Hüllkreises 44 der Stängelhäcksler 34 ist. Die von den nach vorn versetzten Einzugs- und Pflückeinheiten 20' geernteten Fruchtstände können durch an ihrer Rückseite angeordnete separate Förderer (nicht eingezeichnet) der Querförderschnecke 22 zugeführt werden, oder es besteht die Möglichkeit, die Kettenförderer 30 nach hinten zu verlängern. Es könnte dort auch eine Rutsche vorgesehen sein, in der die Fruchtstände nach hinten und unten zur Querförderschnecke 22 gleiten. Bei der Ausführungsform nach Figur 5 sind die Einzugs- und Pflückeinheiten 20 in der Regel in einer Höhe angeordnet.

Eine Frontansicht einer zweiten erfindungsgemäßen Ausführungsform der Anordnung der Einzugs- und Pflückeinheiten 20 mit den Stängelhäckslern 34 zeigt die Figur 6. Hier sind die Einzugs- und Pflückeinheiten 20 in einer Höhe angeordnet und in Vorwärtsrichtung V nicht gegeneinander versetzt. Die Stängelhäcksler 34 rotieren um in seitlicher (d. h. horizontaler, quer zur Vorwärtsrichtung V verlaufender) Richtung geneigte Achsen 40. Dadurch liegt der rechte, äußere Bereich eines Stängelhäckslers 34 oberhalb des linken, äußeren Bereich des nach rechts folgenden Stängelhäckslers 34. Die Hüllkreise 44 überlappen sich somit; durch die seitlich geneigte Anordnung der Achsen 40 vermeidet man aber Kollisionen.

In der dritten Ausführungsform, wie sie in der Figur 7 gezeigt ist, sind die Drehachsen 40 vertikal, die Einzugs- und Pflückeinheiten 20 in einer Höhe angeordnet und in Vorwärtsrichtung V nicht gegeneinander versetzt. Die Überlappung der Hüllkreise 44 wird dadurch erzielt, dass die äußeren Bereiche 46, 48 der Stängelhäcksler 34 abwechselnd nach oben und unten abgewinkelt sind. Es ist jeweils ein Stängelhäcksler 34 mit nach oben abgewinkeltem äußeren Bereich 48 einem Stängelhäcksler 34 mit nach unten abgewinkeltem äußeren Bereich 46 benachbart. Dadurch lassen sich die gewünschten relativ kleinen Reihenabstände erzielen. Anstelle der Abwinklung der äußeren Bereiche 46, 48 könnten diese auch stufenförmig nach unten bzw. oben abgekröpft sein. Es wäre auch denkbar, Stängelhäcksler 34 mit nach oben oder unten versetzten Bereichen 46 oder 48 alternierend mit ebenen Stängelhäckslern 34 anzuordnen. Die in der Figur 7 dargestellte Ausführungsform ermöglicht ein Umdrehen der Stängelhäcksler 34 im Verschleißfall, wobei die Stängelhäcksler 34 benachbarter Einzugs- und Pflückeinheiten 20 getauscht werden, was zusätzlich die Anzahl zu bevorratender Teile gering hält.

Die Figur 8 zeigt eine vierte Ausführungsform. Auch hier sind die Drehachsen 40 vertikal, die Einzugs- und Pflückeinheiten 20 in einer Höhe angeordnet und in Vorwärtsrichtung V nicht gegeneinander versetzt. Die Überlappung der Hüllkreise 44 wird dadurch erzielt, dass die Stängelhäcksler 34 alternierend in unterschiedlichen vertikalen Höhen angeordnet sind.

Es besteht auch die Möglichkeit, Merkmale der dargestellten Ausführungsformen zu kombinieren. So könnten die Einzugs- und Pflückeinrichtungen 20 auch bei Ausführungsformen gemäß Figur 6, 7 oder 8 in Vorwärtsrichtung V gegeneinander versetzt angeordnet sein. Auch könnten die Stängelhäcksler 34 mit den abgewinkelten Bereichen 46, 48 gemäß Figur 7 gegeneinander versetzt angeordnet sein, wie in Figur 8, oder ihre Drehachse 40 kann seitlich geneigt sein, wie in Figur 6.

Durch die Erfindung kann ein seitlicher Verstellbereich der Einzugs- und Pflückeinheiten erreicht werden, der beispielsweise einem Reihenabstand von 37,5 bis 75 cm entspricht.

## Patentansprüche

1. Erntegerät (12), insbesondere Maispflücker, mit zumindest zwei Einzugs- und Pflückeinheiten (20), die jeweils mit einem Pflückspalt (26), einer Einzugseinrichtung (28) und einem Stängelhäcksler (34) versehen sind, wobei die Einzugseinrichtung (28) betreibbar ist, Pflanzen in den Pflückspalt (26) einzuziehen, durch welchen Fruchtstände von den Pflanzen abtrennbar sind, und der zum Zerkleinern der Stängel der Pflanzen vorgesehene Stängelhäcksler (34) stromab der Einzugseinrichtung (28) angeordnet ist und ein Messer (38) aufweist, das um eine sich zumindest näherungsweise vertikal erstreckende Achse (40) in Rotation versetzbar ist, **dadurch gekennzeichnet, dass** die Stängelhäcksler (34) von benachbarten Einzugs- und Pflückeinheiten (20) in der Vorwärtsrichtung (V) des Erntegeräts (12) und/oder zumindest in ihrem äußeren Bereich in vertikaler Richtung relativ zueinander versetzt angeordnet sind.

2. Erntegerät (12) nach Anspruch 1, **dadurch gekennzeichnet, dass** die benachbarten Einzugs- und Pflückeinheiten (20, 20') in Vorwärtsrichtung (V) zueinander versetzt angeordnet sind.

3. Erntegerät (12) nach einem der vorhergehenden Ansprüche, **dadurch gekennzeichnet, dass** die Hüllkreise (44) der Stängelhäcksler (34) der benachbarten Einzugs- und Pflückeinheiten (20) sich in vertikaler Richtung überdecken.

4. Erntegerät (12) nach einem der vorhergehenden Ansprüche, **dadurch gekennzeichnet, dass** zumindest ein Stängelhäcksler (34) um eine in seitlicher Richtung geneigte Achse (40) drehbar gelagert ist.

5. Erntegerät (12) nach einem der vorhergehenden Ansprüche, **dadurch gekennzeichnet, dass** mindestens die überlappenden Bereiche (46, 48) der benachbarten Stängelhäcksler (34) alternierend nach oben und/oder unten versetzt, insbesondere abgewinkelt sind.

6. Erntegerät (12) einem der vorhergehenden Ansprüche, **dadurch gekennzeichnet, dass** die Stängelhäcksler (34) in sich flach und in jeweils alternierenden vertikalen Höhen angeordnet sind.

7. Erntegerät (12) nach einem der vorhergehenden Ansprüche, **dadurch gekennzeichnet, dass** zumindest eine der Einzugs- und Pflückeinheiten (20) verschiebbar am Erntegerät (12) befestigt ist, und dass die Einzugs- und Pflückeinheiten (20) in einem seitlichen Abstand voneinander positionierbar sind, der kleiner als der Durchmesser des von den Messern (38) der Stängelhäcksler (34) beschriebene Hüllkreises (44) ist.

## Claims

1. Harvesting device (12), in particular maize picker, with at least two drawing-in and picking units (20) which are in each case provided with a picking gap (26), a drawing-in device (28) and a stem chopper (34), wherein the drawing-in device (28) can be operated so as to draw plants into the picking gap (26) by means of which seed heads can be separated from the plants, and the stem chopper (34) which is provided for chopping up the stems of the plants is arranged downstream of the drawing-in device (28) and has a blade (38) which can be rotated about an axis (40) extending at least approximately vertically, **characterized in that** the stem choppers (34) of adjacent drawing-in and picking units (20) are arranged offset with respect to each other in the vertical direction in the forwards direction (V) of the harvesting device (12) and/or at least in their outer region.

2. Harvesting device (12) according to Claim 1, **characterized in that** the adjacent drawing-in and picking units (20, 20') are arranged such that they are offset with respect to each other in the forwards direction (V).

3. Harvesting device (12) according to one of the preceding claims, **characterized in that** the envelope circles (44) of the stem choppers (34) of the adjacent drawing-in and picking units (20) overlap in the vertical direction.

4. Harvesting device (12) according to one of the preceding claims, **characterized in that** at least one stem chopper (34) is mounted rotatably about an axis (40) inclined in the lateral direction.

5. Harvesting device (12) according to one of the preceding claims, **characterized in that** at least the overlapping regions (46, 48) of the adjacent stem choppers (34) are offset, in particular angled, upwards and/or downwards in an alternating manner.

6. Harvesting device (12) according to one of the preceding claims, **characterized in that** the stem choppers (34) are flat per se and are arranged in respectively alternating vertical heights.

7. Harvesting device (12) according to one of the preceding claims, **characterized in that** at least one of the drawing-in and picking units (20) is fastened displaceably to the harvesting device (12), and **in that** the drawing-in and picking units (20) can be positioned at a lateral distance from each other which is smaller than the diameter of the envelope circle (44) described by the blades (38) of the stem choppers (34).

## Revendications

1. Dispositif de récolte (12), en particulier cueilleur de maïs, comprenant au moins deux unités de prise et de cueillette (20), qui sont chacune pourvues d'une fente de cueillette (26), d'un dispositif de prise (28) et d'un hacheur pour tiges (34), le dispositif de prise (28) pouvant être entraîné pour prendre des plantes dans la fente de cueillette (26), au moyen de laquelle des fruits sur pieds peuvent être séparés des plantes, et le hacheur pour tiges (34) prévu pour broyer les tiges des plantes étant disposé en aval du dispositif de prise (28) et présentant un couteau (38), qui peut être amené en rotation autour d'un axe (40) s'étendant au moins approximativement verticalement, **caractérisé en ce que** les hacheurs pour tiges (34) d'unités de prise et de cueillette (20) adjacentes dans la direction d'avance (V) du dispositif de récolte (12) et/ou au moins dans leur région extérieure sont disposés de manière décalée les uns par rapport aux autres dans la direction verticale.

2. Dispositif de récolte (12) selon la revendication 1, **caractérisé en ce que** les d'unités de prise et de cueillette (20, 20') adjacentes sont disposées de manière décalée les unes par rapport aux autres dans la direction d'avance (V).

3. Dispositif de récolte (12) selon l'une quelconque des revendications précédentes, **caractérisé en ce que** les cercles d'enveloppe (44) des hacheurs pour tiges (34) des unités de prise et de cueillette (20) adjacentes se recouvrent dans la direction verticale.

4. Dispositif de récolte (12) selon l'une quelconque des revendications précédentes, **caractérisé en ce qu'**au moins un hacheur pour tiges (34) est monté de manière à pouvoir tourner autour d'un axe (40) incliné dans la direction latérale.

5. Dispositif de récolte (12) selon l'une quelconque des revendications précédentes, **caractérisé en ce qu'**au moins les régions se chevauchant (46, 48) des hacheurs pour tiges (34) adjacents sont décalées en alternance vers le haut et/ou vers le bas, notamment sont coudées.

6. Dispositif de récolte (12) selon l'une quelconque des revendications précédentes, **caractérisé en ce que** les hacheurs pour tiges (34) sont disposés à des hauteurs verticales plates en soi et en alternance.

7. Dispositif de récolte (12) selon l'une quelconque des revendications précédentes, **caractérisé en ce qu'**au moins l'une des unités de prise et de cueillette (20) est fixée de manière déplaçable sur le dispositif de récolte (12) et **en ce que** les unités de prise et de cueillette (20) peuvent être positionnées à une distance latérale les unes des autres qui est plus petite que le diamètre du cercle d'enveloppe (44) décrit par les couteaux (38) des hacheurs pour tiges (34).
